# EUROPÄISCHE PATENTANMELDUNG

(11) **EP 1 110 982 A1**
(43) Veröffentlichungstag der Anmeldung: **27.06.2001**
(21) Anmeldenummer: 00126555.2
(22) Anmeldetag: 12.12.2000
(51) Int. Cl.: C08F 257/02, B01J 39/20, B01J 41/14, C08F 2/18

(54) **Verfahren zur Herstellung monodispersen vernetzten Perlpolymerisaten**

(30) Priorität: 24.12.1999 DE 19962864; 18.04.2000 DE 10019144
(71) Anmelder: Bayer Aktiengesellschaft, 51368 Leverkusen (DE)
(72) Erfinder: Podszun, Wolfgang, Dr., 51061 Köln (DE); Feistel, Lothar, 04509 Delitzsch (DE); Halle, Olaf, Dr., 51061 Köln (DE); Schmid, Claudia, Dr., 51381 Leverkusen (DE); Mitschker, Alfred, Dr., 51519 Odenthal (DE)

(57) **Zusammenfassung**

Die Erfindung betrifft ein Verfahren zur Herstellung von weitgehend monodispersen vernetzten Perlpolymerisaten als Vorstufen für Ionenaustauscher.

## Beschreibung

Die Erfindung betrifft ein Verfahren zur Herstellung von weitgehend monodispersen vemetzten Perlpolymerisaten als Vorstufen für Ionenaustauscher.

In jüngster Zeit haben Ionenaustauscher mit möglichst einheitlicher Teilchengröße (im folgenden "monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können. Monodisperse Ionenaustauscher können durch Funktionalisieren von monodispersen vernetzten Perlpolymerisaten erhalten werden.

Eine der Möglichkeiten, monodisperse vemetzte Perlpolymerisate herzustellen, besteht im sogenannten Seed/feed-Verfahren was auch als Saatzulaufverfahren bekannt ist. Dabei werden monodisperse Polymerisatpartikel ("Saat") im Monomer gequollen und dieses dann polymerisiert. Derartige Seed/feed-Verfahren werden beispielsweise in den EP 0 098 130 B1 und EP 0 101 943 B1 beschrieben. Aus der EP-A 0 826 704 und der DE-A 19 852 667 sind Seed/feed-Verfahren unter Verwendung von mikroverkapselten Polymerisatpartikeln als Seed bekannt. Die nach den obengenannten Verfahren erhaltenen Perlpolymerisate zeichnen sich durch einen im Vergleich zu herkömmlichen, direkt synthetisierten Perlpolymerisaten erhöhten Anteil an unvernetztem löslichem Polymerisat aus. Dieser Anteil an nicht vernetztem, löslichem Polymerisat ist bei der Umsetzung zu Ionenaustauschern unerwünscht, da die herausgelösten Polymeranteile in den zur Funktionalisierung eingesetzten Reaktionslösungen angereichert werden. Weiterhin können erhöhte Mengen an löslichem Polymerisat zu einem unerwünschten Ausbluten (leaching) der Ionenaustauscher führen.

Die US-A 5 068 255 beschreibt ein Seed/feed-Verfahren, bei dem ein erstes Monomergemisch bis zu einem Umsatz von 10 bis 80 % polymerisiert und anschließend mit einem zweiten Monomergemisch im wesentlichen frei von Radikalinitiator als Feed unter polymerisierenden Bedingungen versetzt wird. Nach diesem Verfahren gelingt es allerdings nicht, monodisperse Teilchen herzustellen.

Die Aufgabe der vorliegenden Erfindung ist die Bereitstellung von monodispersen vernetzten Perlpolymerisaten mit einem niedrigem Anteil an löslichem Polymerisat.

Es wurde nun gefunden, dass monodisperse vernetzte Perlpolymerisate mit einem niedrigen Anteil an löslichem Polymerisat durch ein Saat-Zulauf-Verfahren unter Verwendung von unvollständig polymerisierten, monodispersen microverkapselten Monomertröpfchen als Saat erhalten werden können.

Gegenstand der vorliegenden Erfindung ist ein Verfahren zur Herstellung von monodispersen vernetzten Perlpolymerisaten als Vorstufen für Ionenaustauscher durch
a) Erzeugen von monodispersen Monomertröpfchen in wässriger Suspension aus einem Monomergemisch 1 aus Styrol, Divinylbenzol und Radikalbildner,
b) Microverkapseln der erhaltenen Monomertröpfchen,
c) Polymerisieren der microverkapselten Monomertröpfchen bis zu einem Umsatz von 10 bis 75 %,
d) Zusatz eines Monomergemisches 2 aus Styrol und Divinylbenzol bei einer Temperatur, bei der der Radikalbildner aus Monomergemisch 1 aktiv ist, wobei das Monomergemisch in die anpolymerisierten microverkapselten Monomertröpfchen eindringt und schließlich
e) Auspolymerisieren der Monomergemische.

Eine bevorzugte Ausführungsform der vorliegenden Erfindung betrifft ein Verfahren bei dem die Monomermischung 2 zusätzlich Acrylnitril und/oder Radikalbildner enthält und wo in Verfahrensschritt d) zumindest einer der Radikalbildner aus Monomergemisch 1 oder 2 aktiv ist.

Eine besondere Ausführungsform der vorliegenden Erfindung betrifft ein Verfahren zur Herstellung von monodispersen vemetzten Perlpolymerisaten als Vorstufen für Ionenaustauscher durch
a) Erzeugen von monodispersen Monomertröpfchen in wässriger Suspension aus einem Monomergemisch 1 aus 87,5 - 99,7 Gew.-% Styrol, 0,2-10 Gew.-% Divinylbenzol und 0,1 bis 2,5 Gew.-% Radikalbildner,
b) Microverkapseln der erhaltenen Monomertröpfchen,
c) Polymerisieren der microverkapselten Monomertröpfchen bis zu einem Umsatz von 10 bis 75 %,
d) Zusatz eines Monomergemisches 2 aus 80 - 99 Gew.-% Styrol, 1 bis 12 Gew.-% Divinylbenzol, 0 - 8 Gew.-% Acrylnitril und gegebenenfalls Radikalbildner bei einer Temperatur, bei der zumindest einer der Radikalbildner aus Monomergemisch 1 oder 2 aktiv ist, wobei das Monomergemisch in die anpolymerisierten microverkapselten Monomertröpfchen eindringt und schließlich
e) Auspolymerisieren der Monomergemische.

Das Monomergemisch 1 enthält vorzugsweise 89,5 - 99,4 Gew.-% Styrol, 0,5 bis 8 Gew.-% Divinylbenzol und 0,1 bis 2,5 Gew.-% Radikalbildner, besonders bevorzugt 92,5 - 98,7 Gew.-% Styrol, 1 - 6 Gew.-% Divinylbenzol und 0,3 - 1,5 Gew.-% Radikalbildner. Die Prozentangaben für Divinylbenzol beziehen sich auf reines Divinylbenzol. Natürlich können auch kommerzielle Divinylbenzolqualitäten, die neben den Isomeren des Divinylbenzols auch Ethylvinylbenzol enthalten, verwendet werden.

Als Radikalbildner sind übliche Initiatoren wie Azoverbindungen und/oder Peroxoverbindungen einsetzbar. Beispielhaft seien genannt:
- Dibenzoylperoxid
- Dilauroylperoxid
- Bis(p-chlorbenzoyl)peroxid
- Dicyclohexylpercarbonat
- 2,2'-Azobisisobutyronitril
- 2,2'-Azobis(2-methylbutyronitril)

Bevorzugte Radikalbildner sind aliphatische Peroxyester entsprechend den Formeln (I), (II) oder (III): 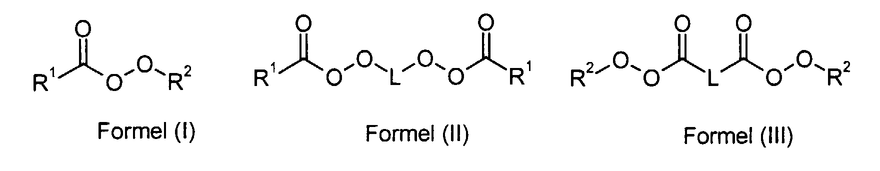 worin
- R¹: für einen Alkylrest mit 2 bis 20 C-Atomen oder einen Cycloalkylrest mit bis zu 20 C-Atomen steht,
- R²: für einen verzweigten Alkylrest mit 4 bis 12 C-Atomen steht und
- L: für einen Alkylenrest mit 2 bis 20 C-Atomen oder einen Cycloalkylenrest mit bis zu 20 C-Atomen steht.

Beispiele für aliphatische Peroxyester gemäß Formel (I) sind:
tert.-Butylperoxyacetat,
tert.-Butylperoxyisobutyrat,
tert.-Butylperoxypivalat,
tert.-Butylperoxyoctoat,
tert.-Butylperoxy-2-ethylhexanoat,
tert.-Butylperoxyneodecanoat,
tert.-Amylperoxyneodecanoat,
tert.-Amylperoxypivalat,
tert.-Amylperoxyoctoat oder
tert.-Amylperoxy-2-ethylhexanoat.

Beispiele für aliphatische Peroxyester gemäß Formel (II) sind:
2,5-Bis(2-ethylhexanoylperoxy)-2,5-dimethylhexan,
2,5-Dipivaloyl-2,5-dimethylhexan oder
2,5-Bis(2-neodecanoylperoxy)-2,5-dimethylhexan.

Beispiele für aliphatische Peroxyester gemäß Formel (III) sind:
Di-tert.-butylperoxyazelat oder
Di-tert.-amylperoxyazelat.

Es kann günstig sein, Mischungen unterschiedlicher Initiatoren, insbesondere Mischungen von Initiatoren mit unterschiedlicher Halbwertszeit zu verwenden.

Die Überführung des Monomergemisches 1 in monodisperse Monomertröpfchen im Verfahrensschritt (a) erfolgt durch bekannte Verdüsungstechniken, wodurch das Monomergemisch in Wasser dispergiert wird. Besonders gut geeignet sind Verdüsungstechniken, die mit einer Schwingungsanregung kombiniert werden. Ein derartiges Verfahren wird zum Beispiel in EP-A 0 173 518 und in US-A 3 922 255 ausführlich beschrieben. Das Verhältnis von Monomergemisch zu Wasser beträgt im allgemeinen 1:1 bis 1:10, vorzugsweise 1:1,5 bis 1:5.

Die Teilchengrößen der Monomertröpfchen betragen 10 bis 500 µm, vorzugsweise 20 bis 400 µm, besonders bevorzugt 100 bis 300 µm. Zur Bestimmung der mittleren Teilchengröße und der Teilchengrößenverteilung sind übliche Methoden, wie die Bildanalyse geeignet. Als Maß für die Breite der Teilchengrößenverteilung der erfindungsgemäßen Perlpolymerisate wird das Verhältnis aus dem 90%-Wert (⌀ (90)) und dem 10%-Wert (⌀ (10)) der Volumenverteilung gebildet. Der 90%-Wert (⌀ (90)) gibt den Durchmesser an, der von 90% der Teilchen unterschritten wird. In entsprechender Weise unterschreiten 10 % der Teilchen den Durchmesser des 10%-Wertes (⌀ (10)). Monodisperse Teilchengrößenverteilungen im Sinne der Erfindung bedeuten ⌀ (90)/⌀ (10) ≤1,5, vorzugsweise ⌀ (90)/⌀ (10) ≤1,25.

Für die Mikroverkapselung im Verfahrensschritt (b) kommen die für diesen Einsatzzweck bekannten Materialien in Frage, insbesondere Polyester, natürliche oder synthetische Polyamide, Polyurethane oder Polyharnstoffe. Als natürliches Polyamid ist Gelatine besonders gut geeignet und kommt insbesondere als Koazervat und Komplexkoazervat zur Anwendung. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Gelatinehaltige Kapseln können mit üblichen Härtungsmitteln wie beispielsweise Formaldehyd oder Glutardialdehyd gehärtet werden. Die Verkapselung von Monomertröpfchen, beispielsweise mit Gelatine, gelatinehaltigen Koazervaten und gelatinehaltigen Komplexkoazervaten, wird in EP 0 046 535 B1 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten in der wässrigen Phase gelösten Reaktivkomponente (beispielsweise einem Amin) zur Reaktion gebracht wird. Die Mikroverkapselung mit gelatinehaltigem Komplexkoazervat ist bevorzugt.

Die Polymerisation der mikroverkapselten Tröpfchen aus Monomergemisch 1 im Verfahrensschritt (c) erfolgt in wässriger Suspension bei erhöhter Temperatur von beispielsweise 55 bis 95°C, vorzugsweise 60 - 80°C und bis zu einem Umsatz von 10 - 75 Gew.%, vorzugsweise 15 - 50 Gew.%. Die jeweils optimale Polymerisationstemperatur ergibt sich für den Fachmann aus den Halbwertszeiten der Radikalbildner. Der Umsatz kann beispielsweise durch IR-Detektion der nicht polymerisierten Doppelbindungen bestimmt werden. Bei der Polymerisation wird die Suspension gerührt.

Die Rührgeschwindigkeit ist dabei unkritisch. Es können niedrige Rührgeschwindigkeiten angewendet werden, die gerade ausreichen, um die suspendierten Teilchen in Schwebe zu halten.

Das Verhältnis von Monomergemisch 1 zu Wasser kann dem unter Verfahrensschritt a) beschriebenen Verhältnis entsprechen oder durch Aufkonzentrieren bzw. Verdünnen verändert werden. Bevorzugt wird ein Verhältnis von Monomergemisch 1 zu Wasser von 1:1,5 bis 1:10 angewendet.

Zur Stabilisierung der mikroverkapselten Monomertröpfchen in der Wasserphase werden Dispergierhilfsmittel verwendet. Geeignete Dispergierhilfsmittel sind natürliche und synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureestern. Sehr gut geeignet sind auch Cellulosederivate, insbesondere Celluloseester oder Celluloseether, wie Carboxymethylcellulose oder Hydroxyethylcellulose. Die Einsatzmenge der Dispergierhilfsmittel beträgt im allgemeinen 0,05 bis 1 % bezogen auf die Wasserphase, vorzugsweise 0,1 bis 0,5 %.

In einer besonderen Ausführungsform der vorliegenden Erfindung wird die Polymerisation in Anwesenheit eines Puffersystems durchgeführt. Bevorzugt werden Puffersysteme, die den pH-Wert der Wasserphase bei Beginn der Polymerisation auf einen Wert zwischen 12 und 3, vorzugsweise zwischen 10 und 4 einstellen. Besonders gut geeignete Puffersysteme enthalten Phosphat-, Acetat-, Citrat- oder Boratsalze.

Bei der Polymerisation des Monomergemisches 1 ist es möglich, einen in der wässrigen Phase gelösten Inhibitor einzusetzen. Als Inhibitoren kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit. Beispiele für organische Inhibitoren sind phenolische Verbindungen wie Hydrochinon, Hydrochinonmonomethylether, Resorcin, Brenzkatechin, tert.-Butylbrenzkatechin und Kondensationsprodukte aus Phenolen mit Aldehyden. Weitere organische Inhibitoren sind stickstoffhaltige Verbindungen wie beispielsweise Diethylhydroxylamin und Isopropylhydroxylamin. Resorcin wird als Inhibitor bevorzugt. Die Konzentration des Inhibitors beträgt 5 - 1000 ppm, vorzugsweise 10 - 500 ppm, besonders bevorzugt 20 - 250 ppm, bezogen auf die wässrige Phase.

Das Monomergemisch 2 besteht bevorzugt aus 82 - 99 Gew.-% Styrol, 1 - 10 Gew.-% Divinylbenzol und 0 - 8 Gew.-% Acrylnitril, besonders bevorzugt aus 86 bis 95 Gew.-% Styrol, 3 - 8 Gew.-% Divinylbenzol und 2 - 6 Gew.-% Acrylnitril. Das Monomergemisch 2 kann zudem Radikalbildner enthalten. Dabei kommen die oben beschriebenen Radikalbildner in Frage. Es wurde gefunden, dass die Verwendung von deutlichen Mengen Radikalbildner im Monomergemisch 2 für das erfindungsgemäße Verfahren nicht nachteilig ist. Auch bei Einsatz von Radikalbildnern im Monomergemisch 2 werden Perlpolymerisate mit hoher Monodispersität erhalten. Sofern das Monomergemisch 1 eine so große Menge an Radikalbildner enthält, die ausreicht, auch das Monomergemisch 2 zu polymerisieren, kann auf eine gesonderte Zugabe von Radikalbildner im Monomergemisch 2 verzichtet werden. Das Verhältnis von Monomergemisch 1 zu Monomergemisch 2 (Seed/feed-Verhältnis) beträgt im allgemeinen 1:0,5 bis 1:10, vorzugsweise 1:0,75 bis 1:6.

Der Zusatz des Monomergemisches 2 im Verfahrensschritt (d) zu den teilweise polymerisierten, microverkapselten Monomertröpfchen erfolgt bei einer Temperatur, die so gewählt ist, dass zumindest einer der Radikalbildner aus Monomergemisch 1 oder 2 aktiv ist. Im allgemeinen werden Temperaturen von 60 - 90°C angewendet. Zur Erzielung hoher Polymerisationsumsätze kann es günstig sein, die Temperatur während der Polymerisation zu steigern.

Die Zugabe des Monomeren erfolgt über einen längeren Zeitraum, beispielsweise über 10 bis 1000 min, vorzugsweise 30 bis 600 min. Die Zugabe kann mit gleichbleibender Geschwindigkeit oder mit einer über die Zeit veränderten Geschwindigkeit erfolgen. Es ist möglich, die Zusammensetzung von Monomergemisch 2 während des Zulaufzeitraumes zu ändern. Zum Beispiel in der Art, dass mit einem niedrigen Divinylbenzolgehalt begonnen und der Divinylbenzolgehalt während des Zugabezeitraumes kontinuierlich gesteigert wird oder umgekehrt.

Das Monomergemisch 2 kann in reiner Form zugesetzt werden. In einer besonderen Ausführungsform der vorliegenden Erfindung wird das Monomergemisch 2 oder ein Teil dieses Gemisches in Form einer Emulsion in Wasser zugesetzt. Diese Emulsion in Wasser kann in einfacher Weise durch Vermischen des Monomergemisches mit Wasser unter Anwendung eines Emulgiermittels mit Hilfe eines Schnellrührers oder Rotor-Statur-Mischer erzeugt werden. Das Verhältnis von Monomergemisch zu Wasser beträgt dabei vorzugsweise 1:0,75 bis 1:3. Die Emulgiermittel können ionischer oder nichtionischer Natur sein. Gut geeignet sind beispielsweise ethoxylierte Nonylphenole mit 2 bis 30 Ethylenoxideinheiten oder das Natriumsalz des Sulfobernsteinsäureisooctylesters.

Zur vollständigen Polymerisation der Monomergemische im Verfahrensschritt (e) wird nach beendeter Zugabe des Monomergemisches 2 das Reaktionsgemisch über einen Zeitraum von beispielsweise 1 - 8 h bei einer Temperatur von 60 - 140°C, vorzugsweise 90 - 130°C gehalten.

Nach der Polymerisation kann das Perlpolymerisat mit den üblichen Methoden, beispielsweise durch Filtrieren oder Dekantieren, isoliert und gegebenenfalls nach einer oder mehreren Wäschen getrocknet und - falls gewünscht - gesiebt werden.

Die nach dem erfindungsgemäßen Verfahren erhaltenen Perlpolymerisate eignen sich in besonders bevorzugter Weise zur Herstellung von Kationen- und Anionenaustauschern. Sie zeichnen sich überraschenderweise durch einen besonders niedrigen Gehalt an löslichem Polymerisat aus. Dieser Gehalt beträgt weniger als 0,8 %, vorzugsweise weniger als 0,4 %.

Die erfindungsgemäßen Perlpolymerisate sind monodispers, d.h. sie besitzen eine äußerst enge Teilchengrößenverteilung. Die Teilchengrößenverteilung ergibt sich aus der Teilchengrößenverteilung der unter Verfahrensschritt (a) erzeugten monodispersen Monomertröpfchen. Der ⌀ (90)/⌀ (10)-Wert beträgt weniger als 1,5, vorzugsweise weniger als 1,25.

Die Umsetzung der Perlpolymerisate zu Kationenaustauschern erfolgt durch Sulfonierung. Geeignete Sulfonierungsmittel sind Schwefelsäure, Schwefeltrioxid und Chlorsulfonsäure. Bevorzugt wird Schwefelsäure mit einer Konzentration von 90 - 100 %, besonders bevorzugt von 96 - 99 %. Die Temperatur bei der Sulfonierung liegt im allgemeinen bei 50 - 200°C, bevorzugt bei 90 - 110°C und besonders bevorzugt bei 95 - 105°C. Es wurde gefunden, dass die erfindungsgemäßen Copolymerisate ohne Zusatz von Quellungsmitteln (wie z.B. Chlorbenzol oder Dichlorethan) sulfoniert werden können und dabei homogene Sulfonierungsprodukte liefern.

Für viele Anwendungen ist es günstig, den Kationenaustauscher von der sauren Form in die Natrium-Form zu überführen. Diese Umladung erfolgt mit Natronlauge einer Konzentration von 10 - 60 %, vorzugsweise 40 - 50 %.

Nach der Umladung können die Kationenaustauscher zur weiteren Reinigung mit entionisiertem Wasser oder wässrigen Salzlösungen, beispielsweise mit Natriumchlorid- oder Natriumsulfatlösungen, behandelt werden.

Die nach dem erfindungsgemäßen Verfahren erhaltenen Kationenaustauscher zeichnen sich durch eine besonders hohe Stabilität und Reinheit aus. Sie zeigen auch nach längerem Gebrauch und vielfacher Regeneration keine Defekte an den Ionenaustauscherkugeln und kein Ausbluten (Leaching) des Austauschers. Sie sind auch unter oxidativen Bedingungen über lange Zeit stabil.

### Beispiele

### Bestimmung der löslichen Anteile

Zur Bestimmung der löslichen Anteile wurden 5 bis 7 g Polymerisat in eine Extraktionshülse eingewogen und über Nacht in einer Soxhlet-Apparatur mit 800 ml Toluol extrahiert (Badtemperatur: 140°C). Das Extrakt wurde über eine Nutsche mit Schwarzbandfilter filtriert und am Rotationsverdampfer auf ca. 1 ml eingeengt. Anschließend wurden 300 ml Methanol zugesetzt und im Vakuum am Rotationsverdampfer bis zur Gewichtskonstanz getrocknet. Von jeder Probe wurde eine Doppelbestimmung durchgeführt.

### Beispiel 1 (Vergleichsbeispiel)

Beispiel 1 der EP-A 0 826 704 wurde nachgestellt. Der Anteil an löslichem Polymerisat wurde zu 2,3 % bestimmt.

### Beispiel 2 (erfindungsgemäß)

### Herstellung eines Perlpolymerisates

Ein Gemisch aus 98,75 Teilen Styrol, 1,25 Teilen 80 %-iges Divinylbenzol (in Ethylbenzol) und 0,5 Teilen tert.Butylperoxy-2-ethylhexanoat (Monomergemisch 1) wird mit Hilfe einer Düsenplatte unter Schwingungsanregung in einer wässrigen Phase zu Tröpfchen mit einer mittleren Teilchengröße von 245 µm und einem ⌀ (90)/⌀ (10)-Wert von 1,06 zerteilt. Wie in Beispiel 1 der EP 0 046 535 B1 beschrieben, werden die Monomertröpfchen in einer Säule mit einem Komplexkoazervat aus Gelatine und einem Copolymer aus Acrylamid und Acrylsäure als Coazervatkomponente verkapselt. Anschließend werden die Monomertröpfchen durch Zugabe von Formaldehyd ausgehärtet und durch Gegenstromwäsche von überschüssiger Gelatine, überschüssigem Copolymerisat sowie Formaldehyd befreit. 999,7 g eines wässrigen Gemisches enthaltend 503,0 g microverkapselte Monomertröpfchen, hergestellt nach obigem Verfahren, werden mit einer wässrigen Lösung aus 12,0 g Gelatine, 20,0 g Natriumhydrogenphosphatdodekahydrat und 200 mg Resorcin in 1560 ml entionisiertem Wasser in einem 4 1 Glasreaktor versetzt. Die Mischung wird unter Rühren (Rührgeschwindigkeit 200 Upm) 10,5 h bei 75°C polymerisiert. Nach einer Polymerisationsszeit von 3,5 h ist ein Umsatz von 20 % erreicht und das Monomergemisch 2 aus 1297 g Styrol, 197 g 80 %-igem Divinylbenzol und 3 g Dibenzoylperoxid wird über einen Zeitraum von 5 h mit einer gleichbleibenden Geschwindigkeit zugetropft. Nach Abschluss der Polymerisationsphase bei 75°C wird der Ansatz 2 h bei 95°C gehalten. Der Ansatz wird über ein 32 µm-Sieb gewaschen und getrocknet. Man erhält 1892 g eines Perlpolymerisats mit glatter Oberfläche. Die Polymerisate erscheinen optisch transparent; die mittlere Teilchengröße beträgt 370 µm und der ⌀ (90)/⌀ (10)-Wert 1,06. Das Perlpolymerisat besitzt einen löslichen Anteil von 0,20 %.

### Beispiel 3 (erfindungsgemäß)

### Herstellung eines Perlpolymerisates

Ein Gemisch aus 98,75 Teilen Styrol, 1,25 Teilen 80 %-igem Divinylbenzol und 0,5 Teilen tert.Butylperoxy-2-ethylhexanoat (Monomergemisch 1) wird mit Hilfe einer Düsenplatte unter Schwingungsanregung in einer wässrigen Phase zu Tröpfchen mit einer mittleren Teilchengröße von 292 µm und einem ⌀ (90)/⌀ (10)-Wert von 1,24 zerteilt und wie in Beispiel 2 beschrieben microverkapselt.

999,7 g des wässrigen Gemisches enthaltend 503,0 g microverkapselte Monomertröpfchen werden mit einer wässrigen Lösung aus 6,0 g Gelatine, 20,0 g Natriumhydrogenphosphatdodekahydrat und 200 mg Resorcin in 1560 ml entionisiertem Wasser in einem 4 1 Glasreaktor versetzt. Die Mischung wird unter Rühren (Rührgeschwindigkeit 200 Upm) 15,5 h bei 75°C polymerisiert. Nach einer Polymerisationszeit von 3,5 h ist ein Umsatz von 20 % erreicht und das Monomergemisch 2 aus 1217 g Styrol, 138 g 80 %-igem Divinylbenzol, 80 g Acrylnitril und 3 g Dibenzoylperoxid wird über einen Zeitraum von 10 h mit einer gleichbleibenden Geschwindigkeit zugetropft. Nach Abschluss der Polymerisationsphase bei 75°C wird der Ansatz 1 h bei 95°C gehalten. Der Ansatz wird über ein 32 µm-Sieb gewaschen und getrocknet. Man erhält 1805 g eines Perlpolymerisats mit glatter Oberfläche. Die Polymerisate erscheinen optisch transparent; die mittlere Teilchengröße beträgt 410 µm und der ⌀ (90)/ ⌀ (10)-Wert 1,24. Das Perlpolymerisat besitzt einen löslichen Anteil von 0,29 %.

### Beispiel 4 (erfindungsgemäß)

### Herstellung eines Perlpolymerisates

Das Beispiel 2 wurde nachgestellt, wobei als Monomergemisch 1 520 g einer Mischung aus 96,25 Teilen Styrol, 3,75 Teilen 80 %-igem Divinylbenzol und 0,5 Teilen tert.Butylperoxy-2-ethylhexanoat eingesetzt wurde. Die mittleren Teilchengröße der microverkapselten Monomertröpfchen beträgt 295 µm und der ⌀ (90)/Ø (10)-Wert 1,08.

1033,5 g eines wässrigen Gemisches enthaltend 520 g microverkapselte Monomertröpfchen werden mit einer wässrigen Lösung aus 12,0 g Gelatine, 20,0 g Natriumhydrogenphosphatdodekahydrat und 200 mg Resorcin in 1500 ml entionisiertem Wasser in einem 4 1 Glasreaktor versetzt. Die Mischung wird unter Rühren (Rührgeschwindigkeit 200 Upm) 9,5 h bei 75°C polymerisiert. Nach einer Polymerisationszeit von 3,5 h ist ein Umsatz von 25 % erreicht und das Monomergemisch 2 aus 803 g Styrol, 64,6 g Divinylbenzol und 1,74 g 80 %-iges Dibenzoylperoxid wird über einen Zeitraum von 4 h mit einer gleichbleibenden Geschwindigkeit zugetropft. Nach Abschluss der Polymerisationsphase bei 75°C wird der Ansatz 2 h bei 95°C gehalten. Der Ansatz wird über ein 32 µm-Sieb gewaschen und getrocknet. Man erhält 1274 g eines Perlpolymerisats mit glatter Oberfläche. Die Polymerisate erscheinen optisch transparent; die mittlere Teilchengröße beträgt 405 µm und der ⌀ (90)/⌀ (10)-Wert 1,08. Das Perlpolymerisat besitzt einen löslichen Anteil von 0,25 %.

### Beispiel 5 (erfindungsgemäß)

### Herstellung eines Perlpolymerisates

Das Beispiel 4 wurde nachgestellt, wobei als Monomergemisch 2 eine Mischung aus 775,6 g Styrol, 64,6 g Divinylbenzol, 27,8 g Acrylnitril und 1,74 g 80 %-igem Dibenzoylperoxid eingesetzt wurde. Das Monomergemisch 2 wird nach 4,5 h Polymerisationszeit, entsprechend einem Polymerisationsumsatz von 35 %, über einen Zeitraum von 4 h mit einer gleichbleibenden Geschwindigkeit zugetropft. Der Ansatz wird insgesamt 10,5 h bei 75°C und anschließend 4 h bei 95°C gehalten. Der Ansatz wird über ein 32 µm-Sieb gewaschen und getrocknet. Man erhält 1321 g eines Perlpolymerisats mit glatter Oberfläche. Die Polymerisate erscheinen optisch transparent; die mittlere Teilchengröße beträgt 415 µm und der ⌀ (90)/⌀ (10)-Wert 1,08. Das Perlpolymerisat besitzt einen löslichen Anteil von 0,30 %.

### Beispiel 6 (erfindungsgemäß)

### Herstellung eines Perlpolymerisates

Das Beispiel 2 wurde nachgestellt, wobei als Monomergemisch 1 892 g einer Mischung aus 93,75 Teilen Styrol, 6,25 Teilen 80 %-igem Divinylbenzol und 0,5 Teilen tert.Butylperoxy-2-ethylhexanoat eingesetzt wurde. Die mittlere Teilchengröße der microverkapselten Monomertröpfchen beträgt 320 µm und der ⌀ (90)/⌀ (10)-Wert 1,06.

1773 g eines wässrigen Gemisches enthaltend 892 g microverkapselte Monomertröpfchen werden mit einer wässrigen Lösung aus 12,0 g Gelatine, 20,0 g Natriumhydrogenphosphatdodekahydrat und 200 mg Resorcin in 1248 ml entionisiertem Wasser in einem 4 1 Glasreaktor versetzt. Die Mischung wird unter Rühren (Rührgeschwindigkeit 200 Upm) 8,5 h bei 75°C polymerisiert. Nach einer Polymerisationszeit von 2,5 h ist ein Umsatz von 15 % erreicht und das Monomergemisch 2 aus 780,4 g Styrol, 19,9 g 80 %-igem Divinylbenzol und 2,1 g Dibenzoylperoxid wird über einen Zeitraum von 4 h mit einer gleichbleibenden Geschwindigkeit zugetropft. Nach Abschluss der Polymerisationsphase bei 75°C wird der Ansatz 4 h bei 95°C gehalten. Der Ansatz wird über ein 32 µm-Sieb gewaschen und getrocknet. Man erhält 1421 g eines Perlpolymerisats mit glatter Oberfläche. Die Polymerisate erscheinen optisch transparent; die mittlere Teilchengröße beträgt 385 µm und der ⌀ (90)/⌀ (10)-Wert 1,06. Das Perlpolymerisat besitzt löslichen Anteil von 0,20 %.

## Patentansprüche

1. Verfahren zur Herstellung von monodispersen vernetzten Perlpolymerisaten durch
a) Erzeugen von monodispersen Monomertröpfchen in wässriger Suspension aus einem Monomergemisch 1 aus Styrol, Divinylbenzol und Radikalbildner,
b) Microverkapseln der erhaltenen Monomertröpfchen,
c) Polymerisieren der microverkapselten Monomertröpfchen bis zu einem Umsatz von 10 bis 75 %,
d) Zusatz eines Monomergemisches 2 aus Styrol und Divinylbenzol bei einer Temperatur, bei der der Radikalbildner aus Monomergemisch 1 aktiv ist, wobei das Monomergemisch in die anpolymerisierten microverkapselten Monomertröpfchen eindringt,
e) Auspolymerisieren der Monomergemische.

2. Verfahren gemäß Anspruch 1, dadurch gekennzeichnet, dass die Monomermischung 2 oder ein Teil davon in Form einer Emulsion in Wasser zugesetzt wird.

3. Verfahren gemäß Anspruch 1 und 2, dadurch gekennzeichnet, dass die Monomermischung 2 zusätzlich Acrylnitril und/oder Radikalbildner enthält, wobei in Verfahrensschritt d) zumindest einer der Radikalbildner aus Monomerengemisch 1 oder 2 aktiv ist.

4. Verfahren zur Herstellung von monodispersen vernetzten Perlpolymerisaten durch
a) Erzeugen von monodispersen Monomertröpfchen in wässriger Suspension aus einem Monomergemisch 1 aus 87,5 - 99,7 Gew.-% Styrol, 0,2 - 10 Gew.-% Divinylbenzol und 0,1 bis 2,5 Gew.-% Radikalbildner,
b) Microverkapseln der erhaltenen Monomertröpfchen,
c) Polymerisieren der microverkapselten Monomertröpfchen bis zu einem Umsatz von 10 bis 75 %,
d) Zusatz eines Monomergemisches 2 aus 80 - 99 Gew.-% Styrol, 1 - 12 Gew.-% Divinylbenzol, 0 - 8 Gew.-% Acrylnitril und gegebenenfalls Radikalbildner bei einer Temperatur, bei der zumindest einer der Radikalbildner aus Monomergemisch 1 oder 2 aktiv ist, wobei das Monomergemisch in die anpolymerisierten microverkapselten Monomertröpfchen eindringt,
e) Auspolymerisieren der Monomergemische.

5. Verfahren gemäß der Ansprüche 1 bis 4, dadurch gekennzeichnet, dass als Radikalbildner Azoverbindungen und/oder Peroxoverbindungen eingesetzt werden.

6. Verfahren gemäß der Ansprüche 1 bis 5, dadurch gekennzeichnet, dass Verfahrensschritt a) mittels schwingungsangeregter Verdüsungstechnik durchgeführt wird.

7. Verfahren gemäß der Ansprüche 1 bis 6, dadurch gekennzeichnet, dass für die Mikroverkapselung Polyester, natürliche oder synthetische Polyamide, Polyurethane oder Polyharnstoffe eingesetzt werden.

8. Verfahren gemäß der Ansprüche 1 bis 7, dadurch gekennzeichnet, dass die Polymerisation in Verfahrensschritt c) in wässriger Suspension bei erhöhter Temperatur von 55-95°C durchgeführt wird.

9. Monodisperse, vemetzte Perlpolymerisate hergestellt nach einem Verfahren gemäß der Ansprüche 1 bis 8.

10. Verwendung der Perlpolymerisate gemäß Anspruch 9 zur Herstellung von Kationen- oder Anionen-Austauschern.

11. Kationenaustauscher hergestellt durch Sulfonierung von Perlpolymerisaten gemäß Anspruch 9.
